(19) Europäisches Patentamt
European Patent Office
Office européen des brevets

(11) Veröffentlichungsnummer: **0 293 849**
**B1**

# (12) EUROPÄISCHE PATENTSCHRIFT

(45) Veröffentlichungstag der Patentschrift: **16.08.90**

(51) Int. Cl.⁵: **C02F 1/26**, C07C 37/72

(21) Anmeldenummer: **88108742.3**

(22) Anmeldetag: **01.06.88**

## (54) Verfahren zur Abtrennung von halogenierten Hydroxy-aromaten aus wässrigen Lösungen.

(30) Priorität: **04.06.87 DE 3718725**

(43) Veröffentlichungstag der Anmeldung:
**07.12.88 Patentblatt 88/49**

(45) Bekanntmachung des Hinweises auf die Patenterteilung:
**16.08.90 Patentblatt 90/33**

(84) Benannte Vertragsstaaten:
**BE CH DE FR GB IT LI NL**

(56) Entgegenhaltungen:
**EP-A- 0 178 494**
**EP-A- 0 256 504**
**DE-A- 2 901 261**

(73) Patentinhaber: **HOECHST AKTIENGESELLSCHAFT, Postfach 80 03 20, D-6230 Frankfurt am Main 80(DE)**

(72) Erfinder: **Wojtech, Bernhard, Dr., Kelkheimer Strasse 67, D-6232 Bad Soden am Taunus(DE)**
Erfinder: **Rittner, Siegbert, Dr., Kornblumenweg 5, D-6082 Mörfelden-Walldorf(DE)**
Erfinder: **Reiss, Heinz, Holunderweg 1, D-6238 Hofheim am Taunus(DE)**
Erfinder: **Zunker, Reinhard, Dr., Am Schieferberg 48, D-6233 Kelkheim (Taunus)(DE)**

EP 0 293 849 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Extraktion von halogenierten Hydroxy-aromaten aus wäßrigen Lösungen.

Es ist bekannt, daß bei der Herstellung und Weiterverarbeitung von halogenierten Hydroxy-aromaten große Mengen an Abwässern anfallen, die schwierig zu reinigen sind. Halogenierte Hydroxy-aromaten werden in großen Mengen als Desinfektions- und Konservierungsmittel verwendet und sind wichtige aromatische Zwischenporodukte. Sie wirken infolge ihrer baktericiden Eigenschaften toxisch, ferner sind sie überwiegend biologisch schwer abbaubar, so daß die Entsorgung solcher Abwässer strengen behördlichen Vorschriften unterliegt. Wenn aus solchen Abwässern die Aromaten ohne Wiedergewinnung abgetrennt werden sollen, stehen eine Reihe von erprobten Verfahren zur Verfügung, bei der es zur Zerstörung der Inhaltstoffe kommt, wie der oxydative Abbau durch Ozonisation bzw. Sauerstoffbehandlung oder die Adsorption an Kohle und ihre sich anschließende partielle oder vollständige Verbrennung. Ist aber die Wiedergewinnung der halogenierten Hydroxy-aromaten lohnend bzw. wird sie gefordert, dann sollte das Trennverfahren auch eine weitgehende, den ökologischen Erfordernissen entsprechende Abwasserreinigung zum Ziel haben.

Austauschprozesse an Harzen sind zwar wirksam, aber die Aufnahmekapazität ist begrenzt und die Regenerierung der Austauscherharze ist verfahrenstechnisch aufwendig. Außerdem sind die Harze wenig spezifisch, so daß andere Inhaltstoffe, wie sie in einem Abwasser immer vorhanden sind, mitadsorbiert werden und das Aufnahmevermögen verringern sowie die Regeneration erschweren, wenn nicht unmöglich machen. Auch die destillative Trennung ist wegen der über dem des Wassers liegenden Siedepunkte der halogenierten Hydroxy-aromaten (>140 °C) energetisch zu aufwendig.

Als geeignetes Trennverfahren erweist sich dagegen die Flüssig-Flüssig-Extraktion. Die Verteilungskoeffizienten ($K_D$ = Konzentration des halogenierten Hydroxy-aromaten in der Extraktionsmittelphase : Konzentration in der wäßrigen Phase) in den üblichen Extraktionsmitteln reichen, wie am Beispiel des 2-Chlorphenols in den AICHE Symp. Series No. 209, Vol. 77, 305 (1981) gezeigt wird, von $K_D = 0{,}7$ beim unpolaren n-Hexan über $K_D = 9$ (Toluol), $K_D = 130$ (n-Hexanol), $K_D = 179$ (Diethylether) bis $K_D = 200$ beim sehr polaren Methylethylketon. Der Vorteil eines hohen $K_D$-Wertes ist aber gekoppelt mit dem Nachteil einer großen Wasserlöslichkeit des Extraktionsmittels. Sie beginnt bei 23 ppm (n-Hexan) über 470 ppm (Toluol) und endet bei 27,1 Gew.-% beim Methylethylketon.

Ein- und mehrwertige nicht-halogenierte Phenole, die schwach sauer oder neutral reagieren sowie oxydationsempfindlich sind, lassen sich bekanntlich mit höheren Aminen oder nach DE-OS 34 36 349 mit Hilfe von Salzen höherer Amine extrahieren.

Es wurde nun überraschenderweise gefunden, daß man die stark sauren halogenierten Hydroxy-aromaten aus Abwässern sogar extrem gut extraktiv abtrennen kann, wenn man Salze von höheren Aminen verwendet. Bezüglich ihrer chemischen Verhaltensweise würde man nämlich erwarten, daß das reine Amin, also die Base, die stark sauren halogenierten Hydroxy-aromaten wesentlich stärker bindet als das bereits schwach saure Aminsalz, wie z.B. das Aminsulfat $[(R_3NH)_2]^{+2}$ $[SO_4]^{-2}$ cder Aminchlorid $[R_3NH]^+$ $[Cl]^-$. Dies ist überraschenderweise nicht der Fall. Gegenstand der Erfindung ist daher ein Verfahren zur Extraktion von halogenierten Hydroxy-aromaten aus wäßrigen Lösungen, dadurch gekennzeichnet, daß man als Extraktionsmittel ein Aminsalz verwendet, das aus einem aliphatischen Amin mit einer Gesamtkohlenstoffzahl von 10 bis 75 und einer starken Säure besteht, wobei das Aminsalz unverdünnt oder mit einem organischen Lösemittel verdünnt eingesetzt werden kann.

Das Aminsalz wird entweder separat hergestellt und dann dem Abwasser zugegeben, oder es wird in situ gebildet. Zur in situ-Bildung wird, wenn das Abwasser bereits genügend Säure enthält, im allgemeinen lediglich Amin zugegeben, andernfalls Amin und Säure.

Die den Aminsalzen zugrundeliegenden aliphatischen Amine, die primär, sekundär oder tertiär sein können, sollen eine Gesamtkohlenstoffzahl von 10 bis 75, vorzugsweise 20 bis 50 C-Atomen haben und können geradkettig, cyclisch oder verzweigt sein. Besonders bevorzugt unter den genannten Aminen sind wegen ihrer geringen chemischen Reaktivität die tertiären Amine, vor allem Tri-n-octylamin, Triisooctylamin, Tri-n-decylamin, Tri-isodecylamin, Tri-n-dodecylamin, Tri-isododecylamin bzw. deren Gemische. Als starke Säuren zur Aminsalzbildung eignen sich besonders Mineralsäuren, wie Phosphorsäure, Salpetersäure, Salzsäure oder Schwefelsäure, vor allem Salzsäure oder Schwefelsäure.

Das Aminsalz bildet sich schnell und quantitativ beim Vermischen des wasserunlöslichen Amins mit einem sauren Abwasser, wobei die Säure aus der wäßrigen Phase unter Ionenpaarbildung in die organische Phase übergeht. Das Gleichgewicht dieser "Neutralisation" liegt ganz auf der Seite des Aminsalzes. Die Gleichgewichtskonstanten betragen $10^4$ bis $10^8$, je nach dem Amin und der Säure. Solche Aminsalze haben die Zusammensetzung $(RH_2NH)X$, $(R_2HNH)X$ oder $(R_3NH)X$, wobei X das Anion der Säure ist.

Werden die Aminsalze separat hergestellt, so können sie unverdünnt dem Abwasser zugegeben werden, sie können aber zur Viskositätsverminderung auch mit einem organischen Lösemittel, z.B. einem Kohlenwasserstoff, verdünnt sein. Auch eine Teilumwandlung des Amins in das Aminsalz ist möglich, wobei das restliche (freie) Amin als Verdünnungsmittel wirkt. Analog kann bei der in situ-Bildung der Aminsalze ein organisches Lösemittel anwesend sein.

Mit den genannten Aminsalzen lassen sich halogenierte Hydroxy-aromaten der allgemeinen Formel (I) abtrennen:

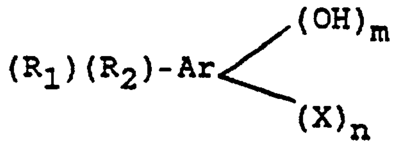

(I)

In der Formel (I) bedeuten X Fluor, Chlor, Brom oder Jod; $R_1$ und $R_2$ bedeuten Wasserstoff, eine $C_1$-$C_4$-Alkylrest, einen Phenylrest, einen Halogen-$C_1$-$C_4$-Alkylrest, einen Halogenphenylrest, einen $C_1$-$C_4$-Alkoxyrest oder einen Phenoxyrest mit oder ohne Halogensubstituenten; Ar bedeutet einen Phenyl- oder Naphthylrest, vorzugsweise einen Phenylrest; m, n sind Zahlen von 1 bis 5 beim Phenylrest, bzw. 1 bis 8 beim Naphthylrest.

Die Konzentration der zu extrahierenden halogenierten Hydroxy-aromaten in der wäßrigen Phase kann bis zur Sättigungskonzentration reichen. Auch können die wäßrigen Lösungen andere gelöste organische oder anorganische Verbindungen und suspendierte Teilchen enthalten, sofern diese die Extraktion nicht stören. Das Verfahren erlaubt auch die Extraktion der halogenierten Hydroxy-aromaten aus sehr verdünnten Lösungen.

Der große Vorteil des erfindungsgemäßen Verfahrens liegt nicht nur in seinem breiten Anwendungsbereich, sondern vor allem in seiner extrem hohen Reingungswirkung, die sich in Verteilungskoeffizienten von teilweise über 1000 äußern. Dadurch ist es möglich, verunreinigtes Abwasser bereits in einer Stufe, d.h. durch einmaliges einfaches Ausrühren mit dem Extraktionsmittel weitgehend, bis auf wenige ppm oder darunter bis in den ppb-Bereich, zu reinigen. Der Extraktionsaufwand ist aber nicht nur wegen der einstufigen Verfahrensweise so gering, sondern das hohe Extraktionsvermögen erlaubt es auch, mit sehr kleinen Extraktionsmittelmengen auszukommen, so daß das Phasenvolumenverhältnis Abwasser/Extraktionsmittel bis auf 20:1 eingestellt werden kann. Bei mehrstufiger Fahrweise sind sogar noch höhere Werte möglich. Das einstufige Ausrühren kann diskontinuierlich oder (vorteilhafter) kontinuierlich geschehen. Führt man die Extraktion mehrstufig im Kreuzstrom oder kontinuierlich im Gegenstrom aus, so erreicht man auch bei höheren Konzentrationen an halogenierten Hydroxy-aromaten im Abwasser den ppb-Bereich ohne Schwierigkeiten.

Ein anderer Vorteil des erfindungsgemäßen Verfahrens ist bei mineralsäurehaltigen Abwässern neben der Entfernung der halogenierten Hydroxy-aromaten eine Abtrennung der Mineralsäure, die aus dem Abwasser in die Aminphase unter Bildung des extraktionswirksamen Aminsalzes übergeht.

Ein weiterer Vorteil des erfindungsgemäßen Verfahrens ist die Möglichkeit der einfachen Rückgewinnung des Amins aus dem Extrakt durch einstufige Rückextraktion mit Natronlauge. Dabei gehen die halogenierten Hydroxy-aromaten zusammen mit der am Amin gebundenen Mineralsäure quantitativ als Natriumsalze in die wäßrige NaOH-Phase, während das freie Amin in der organischen Phase bleibt und wieder in die Abwasserextraktion zurückgeführt werden kann. Die Amin-Rückgewinnung läßt sich einstufig ebenfalls durch einfaches Ausrühren erreichen, wenn eine dem Gehalt an Mineralsäure + Hydroxy-aromat äquivalente NaOH-Menge eingesetzt wird. Vorzugsweise verwendet man konzentrierte Natronlauge in äquivalenter Menge, weil dann eine besonders hohe Konzentration der halogenierten Hydroxy-aromaten im Rückextrakt erzielt wird. Nach der Anreicherung im Rückextrakt, die eine bis zwei Zehnerpotenzen betragen kann, können die halogenierten Hydroxy-aromaten wiedergewonnen werden, entweder als Salze oder nach dem Ansäuern in der Hydroxyform, wobei sie zum größten Teil ausfallen und abfiltriert werden können. Auf diese Weise ist ein praktisch verlustfreies Arbeiten gewährleistet.

Die Erfindung soll anhand folgender Beispiele erläutert werden. Die Extraktionen wurden dabei immer bei Raumtemperatur ausgeführt. Der Name Hostarex A (in der BRD als Warenzeichen geschützt) bezeichnet mit der Zahl 327 ein Gemisch aus gleichen Teilen Tri-n-octylamin und Tri-n-decylamin, mit der Zahl 324 Tri-iso-octylamin.

**Vergleichsbeispiel**

1000 ml einer wäßrigen Lösung von 0,0401 mmol 2-Chlorphenol/g (entspricht 0,5 Gew.-%) wurden mit 100 ml Hostarex A 327 (80,6 g) in einem Rührgefäß intensiv durchmischt und ins Gleichgewicht gebracht, dann die Phasen getrennt und analysiert. Die wäßrige Phase (Raffinat) (993 g) hatte eine Konzentration von 0,0041 mmol 2-Chlorphenol/g (527 ppm), die Extraktphase (Hostarex A 327) (88,8 g) eine Konzentration von 0,4048 mmol 2-Chlorphenol/g. Das enspricht einem Verteilungskoeffizienten ($K_D$ = Konzentration in der Extraktphase : Konzentration in der Raffinatphase) von 98,7 und einem Extraktionsgrad von 89,8 %.

**Beispiel 1**

1000 ml der gleichen wäßrigen Lösung mit 0,0401 mmol 2-Chlorphenol/g (0,5 Gew.-%) wie im Vergleichsbeispiel wurden mit 100 ml (86,8 g) Hostarex A 327 als Hydrochlorid (bestehend aus 79,5 g Hostarex A 327 und 7,3 g Chlorwasserstoff) durch intensives Vermischen ins Gleichgewicht gebracht. Nach der Phasentrennung enthielt die wäßrige Phase (990 g) nur noch 0,0002 mmol 2-Chlorphenol/g (25 ppm), die organische Phase (86,8 g) enthielt 0,46 mmol 2-Chlorphenol/g (5,91 Gew.-%). Der Verteilungskoeffizient ($K_D$) betrug jetzt 2300, der Extraktionsgrad 99,5 %.

**Beispiel 2**

1000 ml einer wäßrigen Lösung aus 0,0401 mmol 4-Chlorphenol (0,5 Gew.-%) wurden mit 100 ml (86,7 g) Hostarex A 324 als Hydrochlorid (bestehend aus 78,8 g Hotarex A 324 und 7,9 g Chlorwasserstoff) durch intensives Vermischen ins Gleichgewicht gebracht. Nach der Phasentrennung enthielt die wäßrige Phase (991 g) noch 0,0004 mmol 4-Chlorphenol/g (50 ppm), die organische Phase (87,8 g) enthielt 0,452 mmol 4-Chlorphenol/g (5,81 Gew.-%). Der Verteilungskoeffizient ($K_D$) betrug 1130, der Extraktionsgrad 99,0 %.

**Beispiel 3**

1000 ml einer wäßrigen Lösung von 0,0317 mmol 2,4-Dichlorphenol/g (0,52 Gew.-%) wurden mit 100 ml (86,8 g) Hostarex A 327 als Hydrochlorid durch intensives Vermischen ins Gleichgewicht gesetzt. Nach der Phasentrennung enthielt die wäßrige Phase (998 g) noch 0,0003 mmol/g (49 ppm) 2,4-Dichlorphenol, die Extraktphase (99 g) enthielt 0,317 mmol/g (5,17 Gew.-%). Das entspricht einem Verteilungskoeffizienten ($K_D$) von 1056 und einem Extraktionsgrad von 99,1 %.

**Beispiel 4**

100 g Hostarex A 327 wurden durch intensives Rühren mit 44,35 ml 4 n-Schwefelsäure in Kontakt gebracht. Dabei ging die Schwefelsäure quantitativ aus der wäßrigen Phase in die organische Aminphase über, so daß diese zu 70 % in das Aminsulfat ($(R_3NH)_2SO_4$) umgewandelt wurde. Nach der Abtrennung der wäßrigen Phase wurde dieses Aminsulfat-Amin-Gemisch als Extraktionsmittel zur Abtrennung von 2,6-Dichlorphenol (0,0125 mmol/g, d.h. 0,20 Gew.-%) aus 1000 ml wäßriger Lösung eingesetzt. Das wäßrige Raffinat (998 g) hatte nur noch eine 2,6-Dichlorphenolkonzentration von 0,0001 mmol/g (d.h. 16 ppm), der organische Extrakt (123 g) enthielt 0,10 mmol/g (d.h. 1,3 Gew.-%). Das entspricht einem Verteilungskoeffizienten ($K_D$) von 1000 und einem Extraktionsgrad von 99,2 %.

**Beispiel 5**

1000 ml einer wäßrigen Lösung mit 860 ppm 2,4,5-Trichlorphenol wurden mit 100 ml (86,8 g) Hostarex A 327 als Hydrochlorid durch intensive Durchmischung ins Gleichgewicht gesetzt. Das wäßrige Raffinat enthielt noch 0,12 ppm und der Extrakt 0,99 Gew.-% 2,4,5-Trichlorphenol. Das entspricht einem Verteilungskoeffizienten ($K_D$) von 82500 und einem Extraktionsgrad von 99,99 %.

**Beispiel 6**

1000 ml einer wäßrigen Lösung mit 410 ppm 2,4,6-Trichlorphenol wurden mit 100 ml (86,8 g) Hostarex A 327 als Hydrochlorid durch intensive Durchmischung ins Gleichgewicht gesetzt. Das wäßrige Raffinat enthielt noch 0,13 ppm, der Extrakt 0,47 Gew.-% 2,4,6-Trichlorphenol. Das entspricht einem Verteilungskoeffizienten ($K_D$) von 36150 und einem Extraktionsgrad von 99,97 %. Nach der Phasentrennung wurde zur Rückextraktion der Extrakt einstufig mit 42 g 20 %iger Natronlauge ausgerührt. Dabei gingen das 2,4,6-Trichlorphenol und die am Amin gebundene Salzsäure vollständig als Na-Salze in die Natronlauge über, während das regenerierte und gereinigte Hostarex A 327 nach Umwandlung in das Hydrochlorid wieder in die Extraktion zurückgeführt wurde.

**Beispiel 7**

1000 ml eines Abwassers mit 10 ppm Pentachlorphenol wurde mit 65 ml (56,4 g) Hostarex A 327 als Hydrochlorid intensiv gemischt und ins Gleichgewicht gesetzt. Im wäßrigen Raffinat verblieben noch 0,015 ppm Pentachlorphenol, der Extrakt enthielt 172 ppm Pentachlorphenol. Das entspricht einem Verteilungskoeffizienten ($K_D$) von 11460 und einem Extraktionsgrad von 99,85 %.

**Beispiel 8**

1000 ml einer wäßrigen Lösung mit 0,490 Gew.-% 2-Fluorphenol wurden entsprechend Beispiel 1 mit 100 ml Hostarex A 327 als Hydrochlorid ins Gleichgewicht gesetzt. Nach der Phasentrennung enthielt die wäßrige Phase (990 g) noch 97 ppm Fluorphenol, und die organische Phase (86,7 g) enthielt 5,54 Gew.-%. Der Verteilungskoeffizient ($K_D$) betrug 570, der Extraktionsgrad 98,0 %.

**Beispiel 9**

1000 ml einer wäßrigen Lösung mit 0,15 Gew.-% 2,4-Dichlor-6-methylphenol wurden entsprechend Beispiel 1 mit 100 ml Hostarex A 327 als Hydrochlorid ins Gleichgewicht gesetzt. Nach der Phasentrennung enthielt die wäßrige Phase (990 g) nur noch 15 ppm 2,4-Dichlor-6-methylphenol und die organische Phase (86,6 g) enthielt 1,715 Gew.-%. Der Verteilungskoeffizient ($K_D$) betrug 1140 und der Extraktionsgrad 99,0 %.

**Beispiel 10**

1000 ml einer wäßrigen Lösung mit 0,2 Gew.-% 2-Chlorphenol wurden mit 200 ml einer Lösung, die 40 Gew.-% Hostarex A 324 als Hydrochlorid und 60 Gew.-% Solvesso® 150 (handelsübliches Gemisch aus $C_{10}$-$C_{11}$-Alkylbenzolen) als Lösemittel enthielt, ins Gleichgewicht gesetzt. Nach der Phasentrennung enthielt die wäßrige Phase (995 g) noch 18 ppm 2-Chlorphenol, und die organische Phase (170 g) enthielt 1,166 Gew.-% 2-Chlorphenol. Der Verteilungskoeffizient ($K_D$) betrug 648 und der Extraktionsgrad 99,1%.

**Patentansprüche**

1. Verfahren zur Extraktion von halogenierten Hydroxy-aromaten aus wäßrigen Lösungen, dadurch gekennzeichnet, daß man als Extraktionsmittel ein Aminsalz verwendet, das aus einem aliphatischen Amin mit einer Gesamtkohlenstoffzahl von 10 bis 75 und einer starken Säure besteht, wobei das Aminsalz unverdünnt oder mit einem organischen Lösemittel verdünnt eingesetzt werden kann.
2. Verfahren nach Anspruch 1, dadurch gekennzeichnet, daß man ein Salz eines tertiären Amins verwendet.
3. Verfahren nach Anspruch 1 oder 2, dadurch gekennzeichnet, daß man ein Aminsalz verwendet, das von der Salzsäure oder Schwefelsäure abgeleitet ist.

**Claims**

1. A process for extracting halogenated hydroxy-aromatics from aqueous solutions, wherein the extractant used is an amine salt comprising an aliphatic amine having a total carbon number of 10 to 75 and a strong acid, it being possible to employ the amine salt in undiluted form or diluted with an organic solvent.
2. The process as claimed in claim 1, wherein a salt of a tertiary amine is used.
3. The process as claimed in claim 1 or 2, wherein an amine salt is used which is derived from hydrochloric acid or sulfuric acid.

**Revendications**

1. Procédé pour extraire des composés aromatiques hydroxyliques halogénés à partir de solutions aqueuses, procédé caractérisé en ce que l'on utilise, comme agent d'extraction, un sel d'amine qui est constitué d'une amine aliphatique renfermant au total de 10 à 75 atomes de carbone et d'un acide fort, le sel d'amine pouvant être mis en jeu à l'état non dilué ou à l'état dilué par un solvant organique.
2. Procédé selon la revendication 1 caractérisé en ce que l'on utilise un sel d'une amine tertiaire.
3. Procédé selon l'une des revendications 1 et 2 caractérisé en ce que l'on utilise un sel d'amine qui dérive de l'acide chlorhydrique ou de l'acide sulfurique.